(19) Europäisches Patentamt
European Patent Office
Office européen des brevets

(11) EP 4 700 084 A1

(12) # EUROPEAN PATENT APPLICATION

(43) Date of publication:
**25.02.2026 Bulletin 2026/09**

(21) Application number: **25196124.9**

(22) Date of filing: **14.08.2025**

(51) International Patent Classification (IPC):
***C08L 25/18*** (2006.01) ***C08L 33/06*** (2006.01)
***C08L 43/02*** (2006.01) ***C09D 125/18*** (2006.01)

(52) Cooperative Patent Classification (CPC):
(C-Sets available)
**C08L 43/02; C08L 25/18; C08L 33/064; C09D 125/18** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **19.08.2024 KR 20240110246**

(71) Applicant: **Hansol Chemical Co., Ltd**
**Seoul 06169 (KR)**

(72) Inventors:
- **OH, Sang-Yeop**
**54524 Iksan-si, Jeonbuk-do (KR)**
- **EOM, Jin-Ju**
**54524 Iksan-si, Jeonbuk-do (KR)**
- **KIM, Kwang-In**
**54524 Iksan-si, Jeonbuk-do (KR)**
- **KWON, Se-Man**
**54524 Iksan-si, Jeonbuk-do (KR)**

(74) Representative: **Ipsilon**
**Le Contemporain**
**50 Chemin de la Bruyère**
**69574 Dardilly Cedex (FR)**

(54) **COPOLYMER, DISPERSION PREPARED USING SAME, POSITIVE ELECTRODE FOR SECONDARY BATTERY MANUFACTURED USING DISPERSION, AND SECONDARY BATTERY COMPRISING POSITIVE ELECTRODE**

(57) Proposed is a copolymer comprising an acrylate-based monomer unit comprising a straight-chain or branched-chain aliphatic hydrocarbon having 5 to 22 carbon atoms, one or more monomer units selected from the group consisting of an acrylate-based monomer unit containing one or more substituted or unsubstituted aromatic or aliphatic rings and a vinyl-based monomer unit comprising one or more substituted or unsubstituted aromatic or aliphatic rings, and a polar monomer unit containing one or more functional groups selected from the group consisting of carboxylic acid (COOH), sulfonic acid ($SO_3H$), phosphonic acid ($PO_3H_2$), cyano (CN), pyrrolidone ($NC_4H_6O$), amide, alkyl amide, dialkyl amide, alcohol, an epoxy group, caprolactam ($C_5H_{10}CNO$), morpholine ($C_4H_8NO$), and oxazolidone ($C_3H_4NO_2$). In addition, proposed are a dispersion prepared using the copolymer, a positive electrode for a secondary battery manufactured using the dispersion, and a secondary battery comprising the positive electrode.

EP 4 700 084 A1

(52) Cooperative Patent Classification (CPC): (Cont.)

C-Sets
**C09D 133/064, C08K 3/041;**
**C09D 143/02, C08K 3/041;**
C08F 220/1818, C08F 212/08, C08F 220/44, C08F 212/30;
C08F 220/1818, C08F 212/08, C08F 220/44, C08F 220/06;
C08F 220/1818, C08F 212/08, C08F 220/44, C08F 230/02

## Description

Technical Field

The present application relates to a copolymer, a dispersion comprising the same, a positive electrode slurry composition, a positive electrode, and a secondary battery. More specifically, the present application relates to a copolymer capable of preparing a carbon nanotube dispersion having improved dispersibility and a higher solid content, a positive electrode slurry composition comprising the same, and an electrode.

Description of the Related Art

Carbon materials are used in various fields of electronics, biotechnology, medicine, and the like due to having unique mechanical, electrical, thermal, and other properties. Recently, carbon nanomaterials such as carbon nanotubes, fullerenes, and graphene have been in the limelight in addition to existing carbon materials such as graphite, activated carbon, and carbon black.

In the meantime, for efficient use of carbon materials, such carbon materials need to be effectively dispersed in a matrix of various materials.

However, carbon materials, especially carbon nanomaterials, tend to aggregate in a matrix due to the strong Van der Waals forces. Accordingly, carbon materials cannot exhibit unique properties upon aggregation in the matrix, leading to a problem of deterioration in uniformity.

Methods of dispersing carbon materials include mechanical dispersion using physical forces such as high shear force, ultrasound, and milling, dispersion using dispersants, and dispersion by surface modification.

However, there are problems in that mechanical dispersion and dispersion by surface modification are likely to cause damage to carbon materials, and such damage significantly deteriorates the unique properties (such as electrical conductivity and thermal conductivity) of such carbon materials.

Thus, active research on dispersing carbon materials using dispersants is being undertaken. In particular, in order to efficiently disperse carbon nanomaterials such as carbon nanotubes, intensive research is being in progress on wrapping carbon nanomaterials using a polymer dispersant or on using $\pi$-$\pi$ interaction between the p-orbital of the aromatic ring of the polymer dispersant and the p-orbital of the carbon nanomaterial.

However, there are still not many dispersants capable of efficiently dispersing carbon materials, especially carbon nanomaterials, while maintaining the unique properties thereof, so research in this regard is demanding.

[Document of Related Art]

[Patent Document]

(Patent Document 1) Korean Patent Application Publication No. 10-2022-0141368

SUMMARY OF THE INVENTION

The present application aims to maximize electrostatic repulsion using a copolymer having a form in which a polar monomer unit is bonded to a metal cation as a dispersant, to prepare a carbon nanotube dispersion having improved dispersibility and a higher solid content on the basis of the maximized electrostatic repulsion, and to provide a positive electrode slurry composition comprising the same, a positive electrode, and a secondary battery.

However, the problems to be solved by the present application are not limited to the aforementioned description, and other problems not mentioned can be clearly understood by those skilled in the art from the following description.

In one aspect of the present application is provided a copolymer comprising: an acrylate-based monomer unit comprising a straight-chain or branched-chain aliphatic hydrocarbon having 5 to 22 carbon atoms; one or more monomer units selected from the group consisting of an acrylate-based monomer unit comprising one or more substituted or unsubstituted aromatic or aliphatic rings and a vinyl-based monomer unit comprising one or more substituted or unsubstituted aromatic or aliphatic rings; and a polar monomer unit comprising one or more functional groups selected from the group consisting of carboxylic acid (COOH), sulfonic acid ($SO_3H$), phosphonic acid ($PO_3H_2$), cyano (CN), pyrrolidone ($NC_4H_6O$), amide, alkyl amide, dialkyl amide, alcohol, an epoxy group, caprolactam ($C_5H_{10}CNO$), morpholine ($C_4H_8NO$), and oxazolidone ($C_3H_4NO_2$).

In another aspect of the present application, is provided a dispersion comprising: the copolymer; a solvent; and carbon nanotubes.

In a further aspect of the present application is provided a positive electrode slurry composition comprising: the dispersion; and a positive electrode active material.

In yet another aspect of the present application is provided a positive electrode comprising: a current collector; and a positive electrode active material layer formed by applying the positive electrode slurry composition on the current collector.

In yet another aspect of the present application is provided a secondary battery comprising the positive electrode.

As described above, a copolymer of the present application can be manufactured by selecting a monomer unit capable of having electrostatic repulsion during copolymer synthesis and selecting a substituent to maximize the electrostatic repulsion.

In this case, in order to maximize the electrostatic repulsion, a functional group of a polar monomer unit ionized as an anion can be substituted with a cation and, in particular, can be substituted with a metal cation.

In addition, a dispersion of the present application can achieve dispersibility and dispersion stability by maximizing the electrostatic repulsion and can have a higher solid content.

Furthermore, a positive electrode slurry composition comprising the dispersion prepared using the copolymer of the present application, a positive electrode, and a secondary battery can be prepared.

DESCRIPTION OF THE PREFERRED EMBODIMENTS

It should be noted that all terms or words used herein and used in the appended claims are not construed as being limited to general and dictionary meanings but will be interpreted based on the meanings and concepts corresponding to the technical ideas of the present application, following the principle that any inventor is allowed to define the concepts of terms as appropriate to describe the application thereof in the best mode.

Thus, the embodiments described herein are configured merely as one of the most preferable examples of the present application and do not exhaustively represent the technical idea of the present application . Therefore, it should be appreciated that there may be various equivalents and modifications that can replace these embodiments as of the filing date of the present application.

As used herein, the singular expressions are intended to include the plural forms unless the context clearly indicates otherwise. It will be further understood that the terms "comprise," "include," "have," and the like when used herein, are intended to specify the presence of stated features, integers, steps, constituent elements, or combinations thereof but do not preclude the possibility of the presence or addition of one or more other features, integers, steps, constituent elements, or combinations thereof.

When various parameters are given herein as a range, preferred range, or enumeration of preferred upper values and preferred lower values, it should be understood to specifically disclose any ranges formed by pairing any upper limit or preferred value and any lower limit or preferred value, regardless of whether such a range is separately disclosed.

When a range of numerical values is mentioned herein, this range is intended to include not only the endpoints but also all integers and fractions within the range, unless otherwise stated. The scope of the present disclosure is intended not to be limited to the specific values mentioned when defining the scope.

As used herein, the expression "a to b" to represent a numerical range is defined as $\geq$ a and $\leq$ b.

According to one aspect of the present application , a copolymer may include: an acrylate-based monomer unit containing a straight-chain or branched-chain aliphatic hydrocarbon having 5 to 22 carbon atoms; one or more monomer units selected from the group consisting of an acrylate-based monomer unit containing one or more substituted or unsubstituted aromatic or aliphatic rings and a vinyl-based monomer unit containing one or more substituted or unsubstituted aromatic or aliphatic rings; and a polar monomer unit containing one or more functional groups selected from the group consisting of carboxylic acid (COOH), sulfonic acid ($SO_3H$), phosphonic acid ($PO_3H_2$), cyano (CN), pyrrolidone ($NC_4H_6O$), amide, alkyl amide, dialkyl amide, alcohol, an epoxy group, caprolactam ($C_5H_{10}CNO$), morpholine ($C_4H_8NO$), and oxazolidone ($C_3H_4NO_2$).

In one embodiment, the acrylate-based monomer unit comprising a straight-chain or branched-chain aliphatic hydrocarbon having 5 to 22 carbon atoms may be formed by polymerizing n-pentyl (meth)acrylate, n-hexyl (meth)acrylate, n-heptyl (meth)acrylate, n-octyl (meth)acrylate, 2-ethylhexyl (meth)acrylate, n-nonyl (meth)acrylate, n-decyl (meth) acrylate, n-undecyl (meth)acrylate, lauryl (meth)acrylate, n-dodecyl (meth)acrylate, n-tridecyl (meth)acrylate, n-tetradecyl (meth)acrylate, n-pentadecyl (meth)acrylate, cetyl (meth)acrylate, n-hexadecyl (meth)acrylate, n-heptadecyl (meth)acrylate, stearyl (meth)acrylate, n-nonadecyl (meth)acrylate, n-eicosyl (meth)acrylate, n-heneicosyl (meth)acrylate, n-docosyl (meth)acrylate, iso-pentyl (meth)acrylate, iso-heptyl (meth)acrylate, iso-octyl (meth)acrylate, iso-nonyl (meth)acrylate, iso-decyl (meth)acrylate, iso-undecyl (meth)acrylate, iso-dodecyl (meth)acrylate, iso-tridecyl (meth) acrylate, iso-tetradecyl (meth)acrylate, iso-pentadecyl (meth)acrylate, iso-cetyl (meth)acrylate, iso-hexadecyl (meth) acrylate, iso-heptadecyl (meth)acrylate, iso-stearyl (meth)acrylate, iso-nonadecyl (meth)acrylate, iso-eicosyl (meth) acrylate, iso-heneicosyl (meth)acrylate, iso-docosyl (meth)acrylate, or a combination thereof.

In this case, the (meth)acrylate-based monomer units described as examples of the acrylate-based monomer unit containing a straight-chain or branched-chain aliphatic hydrocarbon having 5 to 22 carbon atoms may represent both methacrylate and acrylate.

For example, n-pentyl (meth)acrylate described above may represent both n-pentyl methacrylate and n-pentyl acrylate.

For example, the acrylate-based monomer unit containing a straight-chain or branched-chain aliphatic hydrocarbon having 5 to 22 carbon atoms may be formed by polymerizing stearyl acrylate.

In one embodiment, the one or more monomer units selected from the group consisting of the acrylate-based monomer unit comprising one or more substituted or unsubstituted aromatic or aliphatic rings and the vinyl-based monomer unit comprising one or more substituted or unsubstituted aromatic or aliphatic rings may be formed by polymerizing styrene, cyclopentyl acrylate, cyclohexyl acrylate, benzyl acrylate, benzyl methacrylate, phenyl acrylate, phenyl methacrylate, 3-phenoxy benzyl acrylate, σ-phenyl phenoxy ethyl acrylate, σ-phenyl phenoxy ethyl methacrylate, (1-pyrene) 2-methyl-2-propenoate), 1-naphthyl acrylate, 1-naphthyl methacrylate, 2-naphthyl acrylate, 2-naphthyl methacrylate, 9-anthracene methyl acrylate, 9-anthracene methyl methacrylate, or a combination thereof.

For example, the acrylate-based monomer unit containing one or more substituted or unsubstituted aromatic or aliphatic rings and the vinyl-based monomer unit comprising one or more substituted or unsubstituted aromatic or aliphatic rings may be formed by polymerizing styrene.

In one embodiment, the polar monomer unit may be formed by polymerizing acrylic acid, methacrylic acid, itaconic acid, maleic acid, fumaric acid, aconitic acid, vinylbenzoic acid, 2-acrylamido-2-methylpropane sulfonic acid, vinyl sulfonic acid, 4-styrenesulfonic acid, vinyl phosphonic acid, acrylonitrile, vinyl pyrrolidone, acrylamide, N-methyl acrylamide, 2-hydroxyethyl acrylate, 2-hydroxyethyl methacrylate, glycidyl methacrylate, or a combination thereof.

For example, the polar monomer unit may be formed by polymerizing methacrylic acid, maleic acid, 4-styrenesulfonic acid, vinyl phosphonic acid, or a combination thereof.

In one embodiment, the copolymer may be formed by polymerizing stearyl acrylate, styrene, acrylonitrile, and methacrylic acid, may be formed by polymerizing stearyl acrylate, styrene, acrylonitrile, and maleic acid, or may be formed by polymerizing stearyl acrylate, styrene, acrylonitrile, and 4-styrenesulfonic acid, or may be formed by polymerizing stearyl acrylate, styrene, acrylonitrile, and vinyl phosphonic acid.

In one embodiment, the copolymer, based on 100 mol% thereof, may comprise: 5 mol% or more and 70 mol% or less of the acrylate-based monomer unit comprising a straight-chain or branched-chain aliphatic hydrocarbon having 5 to 22 carbon atoms; 5 mol% or more and 70 mol% or less of the one or more monomer units selected from the group consisting of the acrylate-based monomer unit comprising the one or more substituted or unsubstituted aromatic or aliphatic rings and the vinyl-based monomer unit comprising the one or more substituted or unsubstituted aromatic or aliphatic rings; and 5 mol% or more and 50 mol% or less of the polar monomer unit comprising one or more functional groups selected from the group consisting of carboxylic acid (COOH), sulfonic acid ($SO_3H$), phosphonic acid ($PO_3H_2$), cyano (CN), pyrrolidone ($NC_4H_6O$), amide, alkyl amide, dialkyl amide, alcohol, an epoxy group, caprolactam ($C_5H_{10}CNO$), morpholine ($C_4H_8NO$), and oxazolidone ($C_3H_4NO_2$).

For example, the copolymer, based on 100 mol% thereof, may include 5 mol% or more and 70 mol% or less, 10 mol% or more and 60 mol% or less, 15 mol% or more and 50 mol% or less, 20 mol% or more and 40 mol% or less, 30 mol% or more and 40 mol% or less, or 35 mol% or more and 45 mol% or less of the acrylate-based monomer unit comprising a straight-chain or branched-chain aliphatic hydrocarbon having 5 to 22 carbon atoms. When the content of the acrylate-based monomer unit comprising a straight-chain or branched-chain aliphatic hydrocarbon having 5 to 22 carbon atoms falls below the numerical range of the present application, it may be challenging for the copolymer to wrap carbon nanotubes. In addition, when the above content exceeds the numerical range of the present application, the copolymer fails to dissolve in a solvent and thus may precipitate, or phase separation may occur.

In addition, the copolymer, based on 100 mol% thereof, may include, for example, 5 mol% or more and 70 mol% or less, 10 mol% or more and 60 mol% or less, 15 mol% or more and 50 mol% or less, 15 mol% or more and 40 mol% or less, 20 mol% or more and 40 mol% or less, or 25 mol% or more and 35 mol% or less of the one or more monomer units selected from the group consisting of the acrylate-based monomer unit comprising one or more substituted or unsubstituted aromatic or aliphatic rings and the vinyl-based monomer unit comprising one or more substituted or unsubstituted aromatic or aliphatic rings. However, either the content of the acrylate-based monomer unit or the content of the vinyl-based monomer unit may be 0 mol%. When the content of the one or more monomer units selected from the group consisting of the acrylate-based monomer unit comprising one or more substituted or unsubstituted aromatic or aliphatic rings and the vinyl-based monomer unit comprising one or more substituted or unsubstituted aromatic or aliphatic rings falls below the numerical range of the present application, the interaction between the carbon nanotubes and the copolymer chains may weaken, making the copolymer challenging to perform a role as a dispersant. In addition, when the above content exceeds the numerical range of the present application, the viscosity of the dispersant may become excessively high.

Furthermore, the copolymer, based on 100 mol% thereof, may include, for example, 5 mol% or more and 50 mol% or less, 5 mol% or more and 40 mol% or less, 5 mol% or more and 30 mol% or less, 5 mol% or more and 25 mol% or less, 5 mol% or more and 20 mol% or less, or 10 mol% or more and 20 mol% or less of the polar monomer unit. When the content of the polar monomer unit falls below the numerical range of the present application, the copolymer fails to dissolve in a solvent and thus may precipitate, or phase separation may occur. In addition, when the above content exceeds the

numerical range of the present application, the glass transition temperature becomes excessively high, so an electrode may not be flexible when manufactured and may break.

In one example, the copolymer may be represented by Chemical Formula 1 below,

[Chemical Formula 1]

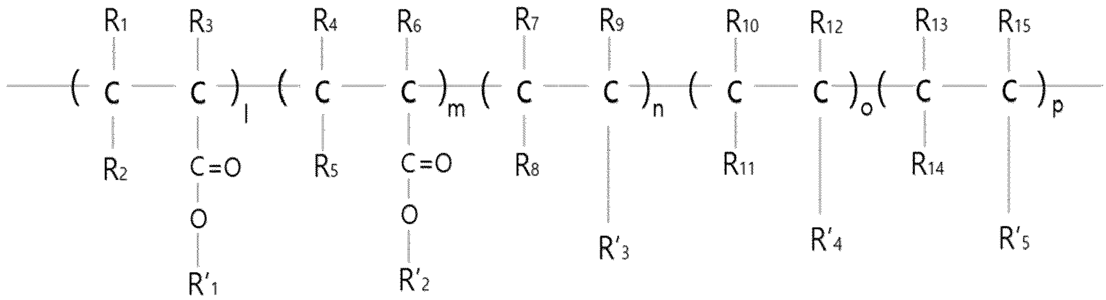

In Chemical Formula 1, $R_1$ to $R_{15}$ are the same or different from each other and are each independently hydrogen or a straight-chain or branched-chain hydrocarbon having 1 to 4 carbon atoms, $R'_1$ is a straight-chain or branched-chain aliphatic hydrocarbon having 5 to 22 carbon atoms, $R'_2$ comprises one or more substituted or unsubstituted aromatic or aliphatic rings, $R'_3$ comprises one or more substituted or unsubstituted aromatic or aliphatic rings, $R'_4$ is one or more selected from the group consisting of cyano (CN), pyrrolidone ($NC_4H_6O$), amide, alkyl amide, dialkyl amide, alcohol, an epoxy group, caprolactam ($C_5H_{10}CNO$), morpholine ($C_4H_8NO$), and oxazolidone ($C_3H_4NO_2$), $R'_5$ is one or more selected from the group consisting of carboxylic acid (COOH), sulfonic acid ($SO_3H$), and phosphonic acid ($PO_3H_2$), $l + m + n + o + p = 1$, $0.05 \leq l \leq 0.70$, $0.05 \leq m + n \leq 0.70$, and $0.05 \leq o + p \leq 0.50$, wherein either m or n may be 0, and o may be 0.

In one embodiment, $R_1$ to $R_{15}$ in Chemical Formula 1 may all be hydrogen.

In one embodiment, $R'_1$ in Chemical Formula 1 may comprise one or more selected from the group consisting of n-pentyl, n-hexyl, n-heptyl, n-octyl, 2-ethylhexyl, n-nonyl, n-decyl, n-undecyl, lauryl, n-dodecyl, n-tridecyl, n-tetradecyl, n-pentadecyl, cetyl, n-hexadecyl, n-heptadecyl, stearyl, n-octadecyl, n-nonadecyl, n-eicosyl, n-heneicosyl, n-docosyl, iso-pentyl, iso-heptyl, iso-octyl, iso-nonyl, iso-decyl, iso-undecyl, iso-dodecyl, iso-tridecyl, iso-tetradecyl, iso-pentadecyl, iso-cetyl, iso-hexadecyl, iso-heptadecyl, iso-stearyl, iso-octadecyl, iso-nonadecyl, iso-eicosyl, iso-heneicosyl, and iso-docosyl.

For example, $R'_1$ in Chemical Formula 1 may be n-octadecyl.

In one embodiment, $R'_2$ and $R'_3$ in Chemical Formula 1 may be the same or different from each other and may each independently comprise one or more selected from the group consisting of substituted or unsubstituted cyclopentyl, cyclohexyl, benzyl, phenyl, phenoxy, naphthalene, anthracene, and pyrene.

For example, in Chemical Formula 1, $R'_2$ may be benzyl, phenyl, naphthalene, or 3-phenoxybenzyl, and $R'_3$ may be phenyl.

In one embodiment, a monomer comprising $R'_1$ in Chemical Formula 1 may be a copolymer formed by polymerizing n-pentyl (meth)acrylate, n-hexyl (meth)acrylate, n-heptyl (meth)acrylate, n-octyl (meth)acrylate, 2-ethylhexyl (meth)acrylate, n-nonyl (meth)acrylate, n-decyl (meth)acrylate, n-undecyl (meth)acrylate, lauryl (meth)acrylate, n-dodecyl (meth)acrylate, n-tridecyl (meth)acrylate, n-tetradecyl (meth)acrylate, n-pentadecyl (meth)acrylate, cetyl (meth) acrylate, n-hexadecyl (meth)acrylate, n-heptadecyl (meth)acrylate, stearyl (meth)acrylate, n-nonadecyl (meth)acrylate, n-eicosyl (meth)acrylate, n-heneicosyl (meth)acrylate, n-docosyl (meth)acrylate, iso-pentyl (meth)acrylate, iso-heptyl (meth)acrylate, iso-octyl (meth)acrylate, iso-nonyl (meth)acrylate, iso-decyl (meth)acrylate, iso-undecyl (meth)acrylate, iso-dodecyl (meth)acrylate, iso-tridecyl (meth)acrylate, iso-tetradecyl (meth)acrylate, iso-pentadecyl (meth)acrylate, iso-cetyl (meth)acrylate, iso-hexadecyl (meth)acrylate, iso-heptadecyl (meth)acrylate, iso-stearyl (meth)acrylate, iso-nonadecyl (meth)acrylate, iso-eicosyl (meth)acrylate, iso-heneicosyl (meth)acrylate, iso-docosyl (meth)acrylate, or a combination thereof, but is not limited thereto.

For example, the monomer comprising $R'_1$ in Chemical Formula 1 may be stearyl acrylate.

In this case, the (meth)acrylate-based monomer unit described as examples of the monomer containing $R'_1$ in Chemical Formula 1 may represent both methacrylate and acrylate. For example, n-pentyl (meth)acrylate described above may represent both n-pentyl methacrylate and n-pentyl acrylate.

In one embodiment, a monomer comprising $R'_2$ in Chemical Formula 1 may be one or more selected from the group consisting of cyclopentyl acrylate, cyclohexyl acrylate, benzyl acrylate, benzyl methacrylate, phenyl acrylate, phenyl methacrylate, 3-phenoxy benzyl acrylate, σ-phenyl phenoxy ethyl acrylate, σ-phenyl phenoxy ethyl methacrylate, (1-pyrene) 2-methyl-2-propenoate, 1-naphthyl acrylate, 1-naphthyl methacrylate, 2-naphthyl acrylate, 2-naphthyl methacrylate, 9-anthracene methyl acrylate, and 9-anthracene methyl methacrylate.

For example, the monomer containing $R'_2$ in Chemical Formula 1 may be one or more selected from the group consisting of benzyl acrylate, benzyl methacrylate, phenyl acrylate, phenyl methacrylate, 1-naphthyl acrylate, 1-naphthyl methacrylate, 2-naphthyl acrylate, 2-naphthyl methacrylate, and 3-phenoxy benzyl acrylate.
In one embodiment, a monomer comprising $R'_3$ in Chemical Formula 1 may be styrene.
In one embodiment, a monomer comprising $R'_4$ in Chemical Formula 1 may be one or more selected from the group consisting of acrylonitrile, vinyl pyrrolidone, acrylamide, N-methyl acrylamide, 2-hydroxyethyl acrylate, 2-hydroxyethyl methacrylate, and glycidyl methacrylate.
For example, the monomer comprising $R'_4$ in Chemical Formula 1 may be acrylonitrile.
In one embodiment, a monomer comprising $R'_5$ in Chemical Formula 1 may be one or more selected from the group consisting of acrylic acid, methacrylic acid, itaconic acid, maleic acid, fumaric acid, aconitic acid, vinylbenzoic acid, 2-acrylamido-2-methylpropane sulfonic acid, vinyl sulfonic acid, 4-styrenesulfonic acid, and vinyl phosphonic acid.
For example, the monomer containing $R'_5$ in Chemical Formula 1 may be one or more selected from the group consisting of methacrylic acid, maleic acid, 4-styrenesulfonic acid, and vinyl phosphonic acid.
In one example, the copolymer may be a random copolymer or a block copolymer depending on a synthesis process.
In one example, the copolymer may have a number average molecular weight in the range of 8,000 or more and 40,000 or less.
For example, the number average molecular weight of the copolymer may be in the range of 8,000 or more and 35,000 or less, 8,000 or more and 30,000 or less, 9,000 or more and 30,000 or less, 10,000 or more and 30,000 or less, or 11,000 or more and 30,000 or less.
When the number average molecular weight of the copolymer falls below the numerical range of the present application, the fluidity of the copolymer may increase, resulting in poor ability to prevent the re-aggregation of carbon materials within a dispersion. In addition, when the number average molecular weight of the copolymer exceeds the numerical range of the present application, the viscosity may be excessively high, resulting in poor usability.
In one embodiment, the copolymer may have a form in which the polar monomer unit is bonded to a metal cation, and a q value calculated by Expression 1 below may be in the range of 1.5 mol% or more and 300 mol% or less,

[Expression 1]

$$5 * a/b \text{ mol\%} \leq q \leq 100 * a/b \text{ mol\%},$$

wherein in Expression 1, a is the number of functional groups capable of being substituted with the metal cation per one polar monomer that forms the polar monomer unit through polymerization, b is the number of positive charges of the metal cation, and a and b are in the range of 1 to 3.
In this case, the q value calculated by Expression 1 when a = 1 and b = 1 may fall within 5 mol% ≤ q ≤ 100 mol%, the q value calculated by Expression 1 when a = 1 and b = 2 may fall within 2.5 mol% ≤ q ≤ 50 mol%, and the q value calculated by Expression 1 when a = 1 and b = 3 may fall within 1.67 mol% ≤ q ≤ 33.3 mol%.
In addition, the q value calculated by Expression 1 when a = 2 and b = 1 may fall within 10 mol% ≤ q ≤ 200 mol%, the q value calculated by Expression 1 when a = 2 and b = 2 may fall within 5 mol% ≤ q ≤ 100 mol%, and the q value calculated by Expression 1 when a = 2 and b = 3 may fall within 3.33 mol% ≤ q ≤ 66.7 mol%.
Furthermore, the q value calculated by Expression 1 when a = 3 and b = 1 may fall within 15 mol% ≤ q ≤ 300 mol%, the q value calculated by Expression 1 when a = 3 and b = 2 may fall within 7.5 mol% ≤ q ≤ 150 mol%, and the q value calculated by Expression 1 when a = 3 and b = 3 may fall within 5 mol% ≤ q ≤ 100 mol%.
For example, when the polar monomer unit is acrylic acid, methacrylic acid, vinylbenzoic acid, 2-acrylamido-2-methylpropane sulfonic acid, vinyl sulfonic acid, 4-styrenesulfonic acid, or the like, a is 1.
In addition, when the polar monomer unit is, for example, maleic acid, fumaric acid, itaconic acid, vinyl phosphonic acid, or the like, a is 2.
Furthermore, when the polar monomer unit is, for example, aconitic acid or the like, a is 3.
In one embodiment, the metal cation may be obtained from an inorganic salt consisting of a cation and an anion that are ionizable in a solvent.
For example, the cation may be lithium (Li), sodium (Na), magnesium (Mg), potassium (K), calcium (Ca), vanadium (V), chromium (Cr), manganese (Mn), iron (Fe), cobalt (Co), nickel (Ni), copper (Cu), aluminum (Al), or zinc (Zn).
In this case, b is 1 when the cation is lithium (Li), sodium (Na), potassium (K), or the like, b is 2 when the cation is magnesium (Mg), calcium (Ca), nickel (Ni), or the like, and b is 3 when the cation is aluminum (Al) or the like.
In addition, the anion may be, for example, $F^-$, $Cl^-$, $Br^-$, $I^-$, $O^{2-}$, $S^{2-}$, $SO_4^{2-}$, $PO_4^{3-}$, $CO_3^{2-}$, or $OH^-$.
The inorganic salt may be a combination of the cation and the anion for substitution but is not limited thereto, and as long as the functional group of the polar monomer unit can be substituted with the metal cation, there are no limitations.
In one embodiment, the copolymer may have a form in which the polar monomer unit is bonded to the metal

cation.

In this case, in order to maximize electrostatic repulsion, the functional group of the polar monomer unit ionized as the anion may be substituted with the cation and, in particular, may be substituted with the metal cation. In addition, the copolymer may include both forms in which the functional group of the polar monomer unit is substituted with the metal cation or unsubstituted.

On this basis, the electrostatic repulsion may be maximized, enabling a dispersion prepared by the copolymer not only to achieve dispersibility and dispersion stability but also to have a higher solid content.

In one embodiment, a radical initiator may be used when preparing the copolymer.

For example, the radical initiator may be 2,2'-azobis-2,4-dimethyl valeronitrile but is not limited thereto, and any radical initiator capable of being used in a solvent phase may be used.

In one embodiment, the copolymer may be used for efficient dispersion of all types of carbon nanotubes, such as single-walled carbon nanotubes, double-walled carbon nanotubes, multi-walled carbon nanotubes, and thin-walled carbon nanotubes, carbon black, acetylene black, graphite, and the like.

In addition, the copolymer may be applied to the manufacturing of both positive and negative electrodes of a secondary battery including the same.

According to another aspect of the present application, a dispersion may comprise the copolymer, a solvent, and carbon nanotubes.

In one embodiment, the solvent may be a polar solvent and may be, for example, one or more selected from the group consisting of N-methyl-2-pyrrolidone (NMP), N-ethyl-2-pyrrolidone (NEP), dimethylformamide (DMF), dimethylacetamide (DMAc), dimethyl sulfoxide (DMSO), γ-butyrolactone, ethyl acetate, propyl acetate, ethanol, isopropyl alcohol, and deionized water.

In one embodiment, the carbon nanotubes comprised in the dispersion may be single-walled carbon nanotubes, double-walled carbon nanotubes, multi-walled carbon nanotubes, thin-walled carbon nanotubes, or a combination thereof. The types of carbon nanotubes are not limited thereto.

In addition, the dispersion, based on 100 wt% of the total weight thereof, may include 1 wt% or more and 10 wt% or less of the carbon nanotubes.

When the content of the carbon nanotubes in the dispersion falls below the numerical range of the present application, the solid content in an electrode slurry may decrease. In addition, when the above content exceeds the numerical range of the present application, the viscosity is excessively high, so the carbon nanotubes fail to be dispersed, making a high-quality dispersion challenging to prepare.

In the meantime, the content of the copolymer in the dispersion may be 0.1 to 0.5 times the content of the carbon nanotubes.

When the content of the copolymer relative to the content of the carbon nanotubes falls below the numerical range of the present application, a sufficient dispersion effect fails to be obtained, making the carbon material unable to be dispersed efficiently. In addition, when the content of the copolymer relative to the content of the carbon nanotubes exceeds the numerical range of the present application, an increase in the proportion of internal materials of a battery may lead to a decrease in energy density.

In one embodiment, the dispersion may have a viscosity of 10000 cps or less at a shear rate of 2.5/s.

For example, the viscosity of the dispersion at a shear rate of 2.5/s may be in the range of 200 cps or more and 800 cps or less or in the range of 270 cps or more and 750 cps or less, which is preferably in the range of 220 cps or more and 725 cps or less.

In one embodiment, the dispersion may have a viscosity of 87000 cps or less after storage at a shear rate of 2.5/s.

For example, the viscosity of the dispersion after storage at a shear rate of 2.5/s may be in the range of 3000 cps or more and 8600 cps or less, which is preferably in the range of 3 100 cps or more and 8550 cps or less.

In one embodiment, the carbon nanotubes dispersed in the dispersion may have a particle size (D50) of 4.6 μm or less.

In other words, the dispersion, comprising the copolymer of the present application, has a small particle size value (D50) of 4.6 μm or less, so the dispersibility of the carbon nanotubes within the dispersion is excellent.

For example, the particle size (D50) of the carbon nanotubes dispersed in the dispersion may be in the range of 2.9 μm or more and 4.6 μm or less, 2.9 μm or more and 4.51 μm or less, or 3.05 μm or more and 4.51 μm or less, which is preferably in the range of 2.94 μm or more and 4.51 μm or less.

In other words, the copolymer (dispersant) of the present application may reduce the particle size of the carbon nanotubes within the dispersion on the basis of excellent dispersion ability to prepare a carbon material dispersion having a uniform and narrow particle size distribution and low viscosity, thereby shortening the dispersion process time.

According to a further aspect of the present application, a positive electrode slurry composition may comprise the dispersion and a positive electrode active material.

In one embodiment, the content of the carbon nanotubes comprised in the positive electrode slurry composition may be 0.001 to 0.1 times the content of the positive electrode active material, which is preferably 0.003 to 0.02 times the

content of the positive electrode active material.

When the content of the carbon nanotubes comprised in the positive electrode slurry composition relative to the content of the positive electrode active material falls below the numerical range of the present application, the conductivity within the electrode active material may deteriorate, leading to deterioration in the output characteristics. In addition, when the above content exceeds the numerical range of the present application, the content of the positive electrode active material may decrease, leading to a decrease in battery capacity.

In one embodiment, the positive electrode active material may be any positive electrode active material available in the art to which the present application pertains. Specific examples of such a positive electrode active material may include lithium metal; a lithium cobalt-based oxide, such as $LiCoO_2$; a lithium manganese-based oxide, such as $Li_{1+x}Mn_{2-x}O_4$ (where x is in the range of 0 to 0.33), $LiMnO_3$, $LiMn_2O_3$, and $LiMnO_2$; a lithium copper oxide, such as $Li_2CuO_2$; a vanadium oxide, such as $LiV_3O_8$, $V_2O_5$, and $Cu_2V_2O_7$; a lithium nickel-based oxide represented by $LiNi_{1-x}M_xO_2$ (where M is Co, Mn, Al, Cu, Fe, Mg, B, or Ga, and x is in the range of 0.01 to 0.3); a lithium manganese composite oxide represented by $LiMn_{2-x}M_xO_2$ (where M is Co, Ni, Fe, Cr, Zn, or Ta, and x is in the range of 0.01 to 0.1) or $Li_2Mn_3MO_8$ (where M is Fe, Co, Ni, Cu, or Zn ); a lithium-nickel-manganese-cobalt-based oxide represented by $Li(Ni_aCo_bMn_c)O_2$ (where $0 < a < 1$, $0 < b < 1$, $0 < c < 1$, and $a + b + c = 1$); sulfur or a disulfide compound; a phosphate, such as $LiFePO_4$, $LiMnPO_4$, $LiCoPO_4$, and $LiNiPO_4$; and $Fe_2(MoO_4)_3$, but are not limited thereto.

The positive electrode active material may be included in an amount in the range of 90 to 99 wt% based on the solid content. When the content of the active material is low, the battery may be unable to exhibit high capacity. In addition, when the content of the active material is excessively high, the adhesive strength, conductivity, and the like of the electrode may be reduced because the contents of a binder, a conductive additive, and the like decrease relatively.

In one embodiment, the positive electrode slurry composition may further comprise a conductive additive.

The conductive additive is not particularly limited and may be appropriately selected depending on the type of battery and capacitor. For example, carbon materials, such as graphite and activated carbon, may be used for lithium-ion secondary batteries. In addition, for nickel-hydrogen secondary batteries, cobalt oxide may be used in positive electrodes, and nickel powder, cobalt oxide, titanium oxide, carbon materials, and the like may be used in negative electrodes.

Examples of such a carbon material may include acetylene black, furnace black, graphite, carbon fibers, and fullerenes.

The amount of conductive additive used, based on 100 wt% of the electrode active material, may be typically in the range of 1 to 20 wt% and is preferably in the range of 2 to 10 wt%.

With the decreasing content of the conductive additive and the increasing content of the positive electrode active material, a secondary battery may have increased energy density. Therefore, it is important to exhibit high efficiency even when using the same amount of conductive additive.

The smaller and more evenly dispersed the conductive additive used in the electrode slurry for a secondary battery, the higher the conductive efficiency, which may lead to lower resistance within the battery, better output characteristics, and better life characteristics. The larger and more unevenly dispersed the conductive additive, the poorer the binding properties and the lower the conductivity, even when using the same amount, which may adversely affect battery life characteristics and output characteristics. In addition, when the viscosity of the dispersion is low, the solid content of the slurry may be increased to accelerate electrode production.

In one embodiment, the positive electrode slurry composition may further comprise a binder.

Any one or two or more selected from poly(meth)acrylic acid, poly(meth)acrylamide, carboxymethyl cellulose, polyvinylidene fluoride, poly(vinylidene fluoride-co-hexafluoropropylene) (P(VdF/HFP)), poly(vinyl acetate), polyvinyl alcohol, polyethylene oxide, polyvinylpyrrolidone, alkylated polyethylene oxide, polyvinyl ether, poly(methyl methacrylate), poly(ethyl acrylate), polytetrafluoroethylene, polyvinyl chloride, polyacrylonitrile, polyvinylpyridine, styrene-butadiene rubber, acrylonitrile-butadiene rubber, and copolymers thereof may be used as the binder. However, the binder is not limited thereto.

The content of the binder in the positive electrode slurry composition may be in the range of 0.3 wt% or more and 10 wt% or less when calculated on a solid content basis. The content of the binder in the positive electrode slurry composition is preferably in the range of 0.7 wt% or more and 8 wt% or less.

When the content of the binder falls below the numerical range of the present application, achieving sufficient binding strength between a current collector and the positive electrode active material or between the positive electrode active materials is deemed highly unlikely. In addition, when the above content of the binder exceeds the numerical range of the present application, the binder may act as resistance within a battery, and the relative content of the positive electrode active material may decrease, resulting in degraded battery performance involving a decrease in battery capacity.

According to yet another aspect of the present application, a positive electrode may comprise a current collector and a positive electrode active material layer formed by applying the positive electrode slurry composition on the current collector.

The positive electrode may be manufactured through the following steps: (a) preparing the positive electrode

slurry composition, including the positive electrode active material and the copolymer of the present application, and (b) applying the positive electrode slurry composition on the positive electrode current collector, followed by drying.

The positive electrode slurry composition may be mixed by typical stirring methods using typical mixers, such as a high-speed shear mixer, a homomixer, and the like.

Step (b) is to manufacture the positive electrode for a lithium secondary battery by applying the positive electrode slurry composition, prepared in Step (a), on the positive electrode current collector, followed by drying.

In this case, there are no limitations in methods of applying the positive electrode slurry composition, and the positive electrode may be manufactured, for example, by performing methods such as doctor blade coating, dip coating, gravure coating, slit die coating, spin coating, comma coating, bar coating, reverse roll coating, screen coating, and cap coating.

The positive electrode for a secondary battery, in which the positive electrode active material layer is ultimately formed by applying the positive electrode slurry composition, followed by drying, may be manufactured.

As the current collector, any of those that are conductive and do not chemically react with the slurry for forming the electrode may be used. Representative examples thereof include an aluminum foil, a copper foil, and the like. In addition, a current collector having a thickness in the range of 3 to 50 $\mu$m may be selected for use.

According to yet another aspect of the present application, a secondary battery may comprise the positive electrode.

In one embodiment, the secondary battery may further include a separator.

The separator needs to be an insulator so that negative and positive electrodes are separable and to provide a passage through which only lithium ions can move. To this end, the wettability in an electrolyte needs to be good, and porous non-woven fabrics, porous polymer films such as polyethylene (PE)/polypropylene (PP), and the like are used. In addition, a ceramic-coated separator with enhanced thermal resistance and mechanical strength may be used to prevent battery short circuits, and such a coating may be applied in either a single-layer or multilayer form.

While the separator may be made of a porous substrate, any porous substrate commonly used in electrochemical devices is usable as the porous substrate. For example, a polyolefin-based porous membrane or non-woven fabric may be used, but examples of the separator are not particularly limited thereto.

The separator may be a porous substrate made of any one or a mixture of two or more selected from the group consisting of PE, PP, polybutylene, polypentene, polyethylene terephthalate, polybutylene terephthalate, polyester, polyacetal, polyamide, polycarbonate, polyimide, polyetheretherketone, polyethersulfone, polyphenylene oxide, polyphenylene sulfide, and polyethylene naphthalate.

An electrolyte solution of the lithium secondary battery, which is a lithium salt-containing non-aqueous electrolyte solution, is composed of a solvent and a lithium salt. As the solvent, a non-aqueous organic solvent, an organic solid electrolyte, an inorganic solid electrolyte, and other electrolytes are used.

The lithium salt is a material that easily dissolves in the non-aqueous electrolyte solution, and examples thereof used may include LiCl, LiBr, LiI, $LiClO_4$, $LiBF_4$, $LiB_{10}Cl_{10}$, $LiPF_6$, $LiAsF_6$, $LiSbF_6$, $LiAlCl_4$, LiSCN, $LiC_4BO_8$, $LiCF_3CO_2$, $LiCH_3SO_3$, $LiCF_3SO_3$, $LiN(SO_2CF_3)_2$, $LiN(SO_2F)_2$, $LiN(SO_2C_2F_5)_2$, $LiC_4F_9SO_3$, $LiC(CF_3SO_2)_3$, $(CF_3SO_2)\cdot 2NLi$, lithium chloroborane, lithium lower aliphatic carboxylate, and lithium 4-phenyl borate imide.

Examples of the non-aqueous organic solvent used may include aprotic organic solvents, such as NMP, propylene carbonate, ethylene carbonate, butylene carbonate, dimethyl carbonate, diethyl carbonate, ethyl methyl carbonate, $\gamma$-butyrolactone, 1,2-dimethoxy ethane, 1,2-diethoxy ethane, tetrahydroxy franc, 2-methyl tetrahydrofuran, DMSO, 1,3-dioxolane, 4-methyl-1,3-dioxene, diethyl ether, formamide, DMF, dioxolane, acetonitrile, nitromethane, methyl formate, methyl acetate, phosphoric acid triester, trimethoxy methane, dioxolane derivatives, sulfolane, methylsulfolane, 1,3-dimethyl-2-imidazolidinone, propylene carbonate derivatives, tetrahydrofuran derivatives, ether, methyl propionate, and ethyl propionate.

Examples of the organic solid electrolyte used may include PE derivatives, polyethylene oxide derivatives, polypropylene oxide derivatives, phosphoric acid ester polymers, poly agitation lysine, polyester sulfide, polyvinyl alcohol, polyvinylidene fluoride, polymers containing secondary dissociation groups, and the like.

Examples of the inorganic solid electrolyte used may include nitrides, halides, sulfates, and the like of Li, such as $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, and $Li_3PO_4$-$Li_2S$-$SiS_2$.

In addition, the non-aqueous electrolyte solution may further include other additives for the purposes of improving the charge and discharge characteristics, flame retardancy, and the like. Examples of such additives may include pyridine, triethyl phosphite, triethanolamine, cyclic ether, ethylene diamine, n-glyme, hexaphosphoric acid triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, aluminum trichloride, fluoroethylene carbonate (FEC), propane sultone (PRS), and vinylene carbonate (VC).

The lithium secondary battery, according to the present application , may be subjected to folding and lamination stacking processes of the separator and the electrodes, in addition to a typical winding process. Furthermore, a battery case may be cylindrical, prismatic, pouch-type, coin-type, or the like. Moreover, such a lithium secondary battery may be

used in small to medium- or large-sized devices such as automobiles and electronic devices.

Hereinafter, the present application will be described in more detail through examples. However, the following examples are intended to explain the present application in more detail, and the scope of the present application is not limited by the following examples.

**Examples and Comparative Examples: Preparation of Copolymer**

**[Example 1]**

Into a five-necked flask reactor, 70 g of N-methyl pyrrolidone (NMP) was introduced as a solvent, followed by adding 40 mol% of stearyl acrylate (SA), 30 mol% of styrene (SM), 10 mol% of acrylonitrile (AN), and 20 mol% of methacrylic acid, based on 100 mol% of the total number of moles of a monomer to be copolymerized, thereto. Then, a solution was prepared by installing a reflux condenser and a thermometer and purging nitrogen while raising the temperature until reaching 75°C. In this case, the total weight of the copolymerized monomer was set to 70 g.

Then, 0.15 g of 2,2'-azobis-2,4-dimethyl valeronitrile was dissolved in 20 g of NMP and added dropwise to the solution for 30 minutes. After completely added dropwise, the temperature of the resulting mixture was maintained at 75°C for 7 hours to prepare a copolymer.

LiOH, an inorganic salt to be used for the substitution of the functional group of methacrylic acid, was dissolved in methanol so that the amount of LiOH introduced relative to that of the compound to be substituted (methacrylic acid) was set to 100 mol%, introduced into the reactor, and stirred at 75°C for 1 hour to conduct the substitution of the functional group of methacrylic acid with the inorganic salt, LiOH.

Thereafter, methanol was removed by distillation, thus preparing the copolymer to be used as a dispersant.

**[Example 2]**

A copolymer was prepared in the same manner as in Example 1, except that NaOH was used instead of LiOH as the inorganic salt to be used for the substitution of the functional group of methacrylic acid.

**[Example 3]**

A copolymer was prepared in the same manner as in Example 1, except that NaCl was used instead of LiOH as the inorganic salt to be used for the substitution of the functional group of methacrylic acid.

**[Example 4]**

A copolymer was prepared in the same manner as in Example 1, except that KOH was used instead of LiOH as the inorganic salt to be used for the substitution of the functional group of methacrylic acid.

**[Example 5]**

A copolymer was prepared in the same manner as in Example 1, except that $Mg(OH)_2$ was used instead of LiOH as the inorganic salt to be used for the substitution of the functional group of methacrylic acid, and the amount of $Mg(OH)_2$ introduced relative to that of the compound to be substituted (methacrylic acid) was set to 50 mol%.

**[Example 6]**

A copolymer was prepared in the same manner as in Example 2, except that 20 mol% of maleic acid was used instead of 20 mol% of methacrylic acid, and the amount of NaOH introduced relative to that of the compound to be substituted (maleic acid) was set to 200 mol%.

**[Example** 7]

A copolymer was prepared in the same manner as in Example 2, except that 20 mol% of 4-styrenesulfonic acid was used instead of 20 mol% of methacrylic acid.

**[Example 8]**

A copolymer was prepared in the same manner as in Example 2, except that 20 mol% of vinyl phosphonic acid

was used instead of 20 mol% of methacrylic acid, and the amount of NaOH introduced relative to that of the compound to be substituted (vinyl phosphonic acid) was set to 200 mol%.

**[Comparative Example 1]**

A copolymer was prepared in the same manner as in Example 1, except for not involving the inorganic salt, LiOH, to be used for the substitution of the functional group of methacrylic acid.

**[Comparative Example 2]**

A copolymer was prepared in the same manner as in Example 2, except that the amount of NaOH introduced relative to that of the compound to be substituted (methacrylic acid) was set to 2 mol%.

**[Comparative Example 3]**

A copolymer was prepared in the same manner as in Example 2, except that the amount of NaOH introduced relative to that of the compound to be substituted (methacrylic acid) was set to 150 mol%.

**[Comparative Example 4]**

A dispersant in commercial use, hydrogenated nitrile butadiene rubber (H-NBR, Product Name: 720H) purchased from ZEON, was used instead of the dispersants prepared in Examples 1 to 8.

Table 1 below shows the contents (mol%) of the monomers, types of inorganic salts, and amounts (mol%) of inorganic salts introduced relative to the compounds to be substituted, used for the preparation of the copolymers of Examples 1 to 8 and Comparative Examples 1 to 3.

[Table 1]

| | **Monomer (mol%)** | | | | | | | **Inorganic salt (mol%)** | **Amount of inorganic salt introduced relative to compound to be substituted (mol%)** |
|---|---|---|---|---|---|---|---|---|---|
| | SA | SM | AN | **Compound to be substituted** | | | | | |
| | | | | MAA | MA | SSA | VPA | | |
| **Example 1** | 40 | 30 | 10 | 20 | | | | LiOH | 100 |
| **Example 2** | 40 | 30 | 10 | 20 | | | | NaOH | 100 |
| **Example 3** | 40 | 30 | 10 | 20 | | | | NaCl | 100 |
| **Example 4** | 40 | 30 | 10 | 20 | | | | KOH | 100 |
| **Example 5** | 40 | 30 | 10 | 20 | | | | $Mg(OH)_2$ | 50 |
| **Example 6** | 40 | 30 | 10 | | 20 | | | NaOH | 200 |
| **Example 7** | 40 | 30 | 10 | | | 20 | | NaOH | 100 |
| **Example 8** | 40 | 30 | 10 | | | | 20 | NaOH | 200 |
| **Comparative Example 1** | 40 | 30 | 10 | 20 | | | | | |
| **Comparative Example 2** | 40 | 30 | 10 | 20 | | | | NaOH | 2 |
| **Comparative Example 3** | 40 | 30 | 10 | 20 | | | | NaOH | 150 |
| **Comparative Example 4** | H-NBR | | | | | | | | |

In Table 1, SA refers to stearyl acrylate, SM refers to styrene, AN refers to acrylonitrile, MAA refers to methacrylic acid, MA refers to maleic acid, SSA refers to 4-styrenesulfonic acid, and VPA refers to vinyl phosphonic acid.

In Table 1, the amounts (mol%) of inorganic salts introduced relative to the compounds to be substituted, in

Examples 1 to 8, represent q values calculated by Expression 1, indicating complete substitution (100 * a/b mol%).

[Expression 1]

$$5 * a/b \text{ mol\%} \leq q \leq 100 * a/b \text{ mol\%}$$

In Expression 1, a is the number of functional groups of the polar monomer units each independently formed by polymerizing methacrylic acid, maleic acid, 4-styrenesulfonic acid, or vinyl phosphonic acid that are capable of being substituted with metal cations in Table 1.

In Expression 1, b is the number of positive charges of the metal cations, Li, Na, K, and Mg, of the inorganic salts in Table 1.

In other words, Examples 1 to 4 and 7 correspond to a case where a, the number of functional groups capable of being substituted with the metal cation of the polar monomer unit formed by polymerizing methacrylic acid or 4-styrenesulfonic acid, is 1, and b, the number of positive charges of the metal cation of the inorganic salt, is 1. In addition, Example 5 corresponds to a case where a, the number of functional groups capable of being substituted with the metal cation of the polar monomer unit formed by polymerizing methacrylic acid, is 1, and b, the number of positive charges of the metal cation of the inorganic salt, is 2. Furthermore, Examples 6 and 8 correspond to a case where a, the number of functional groups capable of being substituted with the metal cation of the polar monomer unit formed by polymerizing maleic acid or vinyl phosphonic acid, is 2, and b, the number of positive charges of the metal cation of the inorganic salt, is 1.

**[Preparation Examples]**

**Preparation Examples 1 to 8 and Comparative Preparation Examples 1 to 4: Preparation of Dispersion**

A dispersion having a solid content of 3.75 wt% was prepared by introducing 0.75 g (based on 100% solid content) of each of the copolymers prepared in Examples 1 to 8 and Comparative Examples 1 to 4, serving as the dispersant, 3 g of multi-walled carbon nanotubes (MWCNTs), 96.25 g of NMP, and 400 g of zirconia beads having an average diameter of 0.65 mm into a planetary ball milling device, followed by dispersion at 400 rpm for 60 minutes, and filtering the resulting zirconia bead mixture through a 40-mesh screen.

Table 2 below shows the types of copolymers included in the dispersions of Preparation Examples 1 to 8 and Comparative Preparation Examples 1 to 4.

[Table 2]

| Dispersion | Copolymer including dispersion |
|---|---|
| Preparation Example 1 | Example 1 |
| Preparation Example 2 | Example 2 |
| Preparation Example 3 | Example 3 |
| Preparation Example 4 | Example 4 |
| Preparation Example 5 | Example 5 |
| Preparation Example 6 | Example 6 |
| Preparation Example 7 | Example 7 |
| Preparation Example 8 | Example 8 |
| Comparative Preparation Example 1 | Comparative Example 1 |
| Comparative Preparation Example 2 | Comparative Example 2 |
| Comparative Preparation Example 3 | Comparative Example 3 |
| Comparative Preparation Example 4 | Comparative Example 4 |

**Preparation Example 9: Manufacturing of Positive Electrode**

A slurry for forming a positive electrode was prepared by mixing 4.6 g of each of the dispersions prepared by Preparation Examples 1 to 8, 27.3 g of a positive electrode active material (NCM622), 18 g of polyvinylidene fluoride (PVDF) dissolved at 8 wt% in NMP, and 7.9 g of NMP using a planetary centrifugal mixer (ARE-310, Thinky). In this case,

the solid content of the slurry was 50 wt%.

The resulting slurry was applied on a 20 μm-thick aluminum foil using a doctor blade. The slurry-applied electrode was dried in an oven at 130°C for 12 hours or more and then rolled to adjust the density of the resulting electrode mixture to 2.4 g/cc. Thereafter, vacuum drying was performed at 110°C to manufacture a positive electrode plate.

**[Evaluation Example]**

**Evaluation Example 1: Measurement of Initial Viscosity, Viscosity after Storage, and Particle Size of Dispersion**

The initial viscosity of the dispersions of Preparation Examples 1 to 8 and Comparative Preparation Examples 1 to 4 was measured at 25°C by a HAAKE MARS rheometer. The measurement was performed at a shear rate in the range of 0.01/s to 200/s.

The dispersions of Preparation Examples 1 to 8 and Comparative Preparation Examples 1 to 4 were stored at 60°C for 3 days to measure the viscosity after storage at 25°C by a HAAKE MARS rheometer. The measurement was performed at a shear rate in the range of 0.01/s to 200/s.

The particle size of the dispersions of Preparation Examples 1 to 8 and Comparative Preparation Examples 1 to 4 was measured by Mastersizer 3000 using the Fraunhofer diffraction model.

The initial viscosity at a shear rate of 2.5/s, the viscosity after storage at a shear rate of 2.5/s, and the particle size D50 (median value) are shown in Table 3 below.

[Table 3]

| | Initial viscosity (cP, at shear rate of 2.5/s) | Viscosity after storage (cP, at shear rate of 2.5/s) | Particle size (μm, D50) |
|---|---|---|---|
| Preparation Example 1 | 342.7 | 3944.8 | 3.12 |
| Preparation Example 2 | 253.4 | 3198.1 | 3.07 |
| Preparation Example 3 | 523.2 | 6084.2 | 3.66 |
| Preparation Example 4 | 223.7 | 4304 | 2.94 |
| Preparation Example 5 | 723.8 | 8186.5 | 3.20 |
| Preparation Example 6 | 292.5 | 4960.3 | 3.51 |
| Preparation Example 7 | 603.3 | 7424.9 | 3.87 |
| Preparation Example 8 | 681.1 | 8511.6 | 4.51 |
| Comparative Preparation Example 1 | 2594.8 | 57612 | 2.98 |
| Comparative Preparation Example 2 | 2402.9 | 55094 | 2.91 |
| Comparative Preparation Example 3 | 260.3 | 3291.5 | 3.01 |
| Comparative Preparation Example 4 | 38154 | 92151 | 4.49 |

In this case, compared to the dispersion of Comparative Preparation Example 1, the initial viscosity and viscosity after storage of the dispersions of Preparation Examples 1 to 8 were confirmed to be significantly improved when dispersing carbon nanotubes (CNTs) using the copolymers having a form in which the polar monomer unit was bonded to the metal cation. This is because the functional group of the polar monomer unit, existing in an anionic form, significantly improves dispersion stability on the basis of electrostatic repulsion.

In addition, compared to the dispersion of Comparative Preparation Example 4 prepared using the dispersant in commercial use, the dispersions of Preparation Examples 1 to 8 were confirmed to be superior in terms of initial viscosity and viscosity after storage.

In the meantime, a comparison between Preparation Example 2 and Comparative Preparation Example 2 confirmed that when the amount of functional group of the polar monomer unit substituted with the metal cation fell below the appropriate range, electrostatic repulsion failed to be sufficiently generated, so achieving improvement in dispersibility and dispersion stability was deemed highly unlikely.

In addition, a comparison between Preparation Example 2 and Comparative Preparation Example 3 showed that the substitution of the functional group of the polar monomer unit no longer occurred even with the use of the inorganic salt

the amount of which exceeded the appropriate range, confirming that no additional improvement in dispersibility and dispersion stability was achieved.

In other words, in the case of Preparation Examples 1 to 4 and 7, the dispersions prepared using the copolymers of Examples 1 to 4 and 7, the q values calculated by Expression 1 fall within a range corresponding to 5 mol% $\leq$ q $\leq$ 100 mol%. In addition, in the case of Preparation Example 5, the dispersion prepared using the copolymer of Example 5, the q value calculated by Expression 1 falls within a range corresponding to 2.5 mol% $\leq$ q $\leq$ 50 mol%. Furthermore, in the case of Preparation Examples 6 and 8, the dispersions prepared using the copolymers of Examples 6 and 8, the q values calculated by Expression 1 fall within a range corresponding to 10 mol% $\leq$ q $\leq$ 200 mol%.

Therefore, it was confirmed in all Examples 1 to 8 that substituting the functional groups of the polar monomer units, each independently formed by polymerizing methacrylic acid, maleic acid, 4-styrenesulfonic acid, or vinyl phosphonic acid, with the metal cations within the value range of Expression 1 defined herein could improve the initial viscosity and viscosity after storage of the dispersions.

## Claims

**1.** A copolymer comprising:

an acrylate-based monomer unit comprising a straight-chain or branched-chain aliphatic hydrocarbon having 5 to 22 carbon atoms;

one or more monomer units selected from the group consisting of an acrylate-based monomer unit comprising one or more substituted or unsubstituted aromatic or aliphatic rings and a vinyl-based monomer unit comprising one or more substituted or unsubstituted aromatic or aliphatic rings; and

a polar monomer unit comprising one or more functional groups selected from the group consisting of carboxylic acid (COOH), sulfonic acid ($SO_3H$), phosphonic acid ($PO_3H_2$), cyano (CN), pyrrolidone ($NC_4H_6O$), amide, alkyl amide, dialkyl amide, alcohol, an epoxy group, caprolactam ($C_5H_{10}CNO$), morpholine ($C_4H_8NO$), and oxazolidone ($C_3H_4NO_2$).

**2.** The copolymer according to claim 1, wherein the acrylate-based monomer unit comprising the straight-chain or branched-chain aliphatic hydrocarbon having 5 to 22 carbon atoms is formed by polymerizing n-pentyl (meth)acrylate, n-hexyl (meth)acrylate, n-heptyl (meth)acrylate, n-octyl (meth)acrylate, 2-ethylhexyl (meth)acrylate, n-nonyl (meth) acrylate, n-decyl (meth)acrylate, n-undecyl (meth)acrylate, lauryl (meth)acrylate, n-dodecyl (meth)acrylate, n-tridecyl (meth)acrylate, n-tetradecyl (meth)acrylate, n-pentadecyl (meth)acrylate, cetyl (meth)acrylate, n-hexadecyl (meth) acrylate, n-heptadecyl (meth)acrylate, stearyl (meth)acrylate, n-nonadecyl (meth)acrylate, n-eicosyl (meth)acrylate, n-heneicosyl (meth)acrylate, n-docosyl (meth)acrylate, iso-pentyl (meth)acrylate, iso-heptyl (meth)acrylate, iso-octyl (meth)acrylate, iso-nonyl (meth)acrylate, iso-decyl (meth)acrylate, iso-undecyl (meth)acrylate, iso-dodecyl (meth) acrylate, iso-tridecyl (meth)acrylate, iso-tetradecyl (meth)acrylate, iso-pentadecyl (meth)acrylate, iso-cetyl (meth) acrylate, iso-hexadecyl (meth)acrylate, iso-heptadecyl (meth)acrylate, iso-stearyl (meth)acrylate, iso-nonadecyl (meth)acrylate, iso-eicosyl (meth)acrylate, iso-heneicosyl (meth)acrylate, iso-docosyl (meth)acrylate, or a combination thereof.

**3.** The copolymer according to claim 1, wherein the one or more monomer units selected from the group consisting of the acrylate-based monomer unit comprising the one or more substituted or unsubstituted aromatic or aliphatic rings and the vinyl-based monomer unit comprising the one or more substituted or unsubstituted aromatic or aliphatic rings are formed by polymerizing styrene, cyclopentyl acrylate, cyclohexyl acrylate, benzyl acrylate, benzyl methacrylate, phenyl acrylate, phenyl methacrylate, 3-phenoxy benzyl acrylate, $\sigma$-phenyl phenoxy ethyl acrylate, $\sigma$-phenyl phenoxy ethyl methacrylate, (1-pyrene) 2-methyl-2-propenoate), 1-naphthyl acrylate, 1-naphthyl methacrylate, 2-naphthyl acrylate, 2-naphthyl methacrylate, 9-anthracene methyl acrylate, 9-anthracene methyl methacrylate, or a combination thereof.

**4.** The copolymer according to claim 1, wherein the polar monomer unit is formed by polymerizing acrylic acid, methacrylic acid, itaconic acid, maleic acid, fumaric acid, aconitic acid, vinylbenzoic acid, 2-acrylamido-2-methylpropane sulfonic acid, vinyl sulfonic acid, 4-styrenesulfonic acid, vinyl phosphonic acid, acrylonitrile, vinyl pyrrolidone, acrylamide, N-methyl acrylamide, 2-hydroxyethyl acrylate, 2-hydroxyethyl methacrylate, glycidyl methacrylate, or a combination thereof.

**5.** The copolymer according to claim 1, wherein the copolymer, based on 100 mol% thereof, comprises:

5 mol% or more and 70 mol% or less of the acrylate-based monomer unit comprising the straight-chain or branched-chain aliphatic hydrocarbon having 5 to 22 carbon atoms;
5 mol% or more and 70 mol% or less of the one or more monomer units selected from the group consisting of the acrylate-based monomer unit comprising the one or more substituted or unsubstituted aromatic or aliphatic rings and the vinyl-based monomer unit comprising the one or more substituted or unsubstituted aromatic or aliphatic rings; and
5 mol% or more and 50 mol% or less of the polar monomer unit.

**6.** The copolymer according to claim 1, wherein the copolymer is represented by Chemical Formula 1 below,

[Chemical Formula 1]

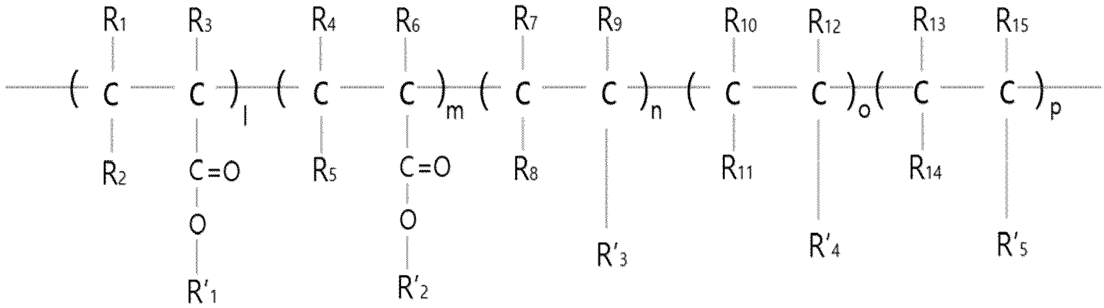

wherein $R_1$ to $R_{15}$ are the same or different from each other and are each independently hydrogen or a straight-chain or branched-chain hydrocarbon having 1 to 4 carbon atoms,
$R'_1$ is a straight-chain or branched-chain aliphatic hydrocarbon having 5 to 22 carbon atoms,
$R'_2$ comprises one or more substituted or unsubstituted aromatic or aliphatic rings,
$R'_3$ comprises one or more substituted or unsubstituted aromatic or aliphatic rings,
$R'_4$ is one or more selected from the group consisting of cyano (CN), pyrrolidone ($NC_4H_6O$), amide, alkyl amide, dialkyl amide, alcohol, an epoxy group, caprolactam ($C_5H_{10}CNO$), morpholine ($C_4H_8NO$), and oxazolidone ($C_3H_4NO_2$),
$R'_5$ is one or more selected from the group consisting of carboxylic acid (COOH), sulfonic acid ($SO_3H$), and phosphonic acid ($PO_3H_2$),

$$l + m + n + o + p = 1,\ 0.05 \le l \le 0.70,\ 0.05 \le m + n \le 0.70, \text{ and } 0.05 \le o + p \le 0.50,$$

wherein either m or n may be 0, and o may be 0.

**7.** The copolymer according to claim 6, wherein $R'_1$ comprises one or more selected from the group consisting of n-pentyl, n-hexyl, n-heptyl, n-octyl, 2-ethylhexyl, n-nonyl, n-decyl, n-undecyl, lauryl, n-dodecyl, n-tridecyl, n-tetradecyl, n-pentadecyl, cetyl, n-hexadecyl, n-heptadecyl, stearyl, n-octadecyl, n-nonadecyl, n-eicosyl, n-heneicosyl, n-docosyl, iso-pentyl, iso-heptyl, iso-octyl, iso-nonyl, iso-decyl, iso-undecyl, iso-dodecyl, iso-tridecyl, iso-tetradecyl, iso-pentadecyl, iso-cetyl, iso-hexadecyl, iso-heptadecyl, iso-stearyl, iso-octadecyl, iso-nonadecyl, iso-eicosyl, iso-heneicosyl, and iso-docosyl.

**8.** The copolymer according to claim 6, wherein $R'_2$ and $R'_3$ are the same or different from each other and each independently comprise one or more selected from the group consisting of substituted or unsubstituted cyclopentyl, cyclohexyl, benzyl, phenyl, phenoxy, naphthalene, anthracene, and pyrene.

**9.** The copolymer according to claim 6, wherein a monomer comprising $R'_2$ is one or more selected from the group consisting of cyclopentyl acrylate, cyclohexyl acrylate, benzyl acrylate, benzyl methacrylate, phenyl acrylate, phenyl methacrylate, 3-phenoxy benzyl acrylate, $\sigma$-phenyl phenoxy ethyl acrylate, $\sigma$-phenyl phenoxy ethyl methacrylate, (1-pyrene) 2-methyl-2-propenoate, 1-naphthyl acrylate, 1-naphthyl methacrylate, 2-naphthyl acrylate, 2-naphthyl methacrylate, 9-anthracene methyl acrylate, and 9-anthracene methyl methacrylate, and
a monomer comprising $R'_3$ is styrene.

**10.** The copolymer according to claim 6, wherein a monomer comprising $R'_4$ is one or more selected from the group

consisting of acrylonitrile, vinyl pyrrolidone, acrylamide, N-methyl acrylamide, 2-hydroxyethyl acrylate, 2-hydroxyethyl methacrylate, and glycidyl methacrylate.

**11.** The copolymer according to claim 6, wherein a monomer comprising $R'_5$ is one or more selected from the group consisting of acrylic acid, methacrylic acid, itaconic acid, maleic acid, fumaric acid, aconitic acid, vinylbenzoic acid, 2-acrylamido-2-methylpropane sulfonic acid, vinyl sulfonic acid, 4-styrenesulfonic acid, and vinyl phosphonic acid.

**12.** The copolymer according to claim 1, wherein the polar monomer unit is bonded to a metal cation, and

a q value calculated by Expression 1 below is in a range of 1.5 mol% or more and 300 mol% or less,

[Expression 1]

$$5 * a/b \text{ mol\%} \leq q \leq 100 * a/b \text{ mol\%},$$

wherein in Expression 1, a is the number of functional groups capable of being substituted with the metal cation in the polar monomer unit,
b is the number of positive charges of the metal cation, and
a and b are in a range of 1 to 3.

**13.** A dispersion comprising:

the copolymer according to any one of claims 1 to 12;
a solvent; and
carbon nanotubes.

**14.** A positive electrode slurry composition comprising:

the dispersion according to claim 13; and
a positive electrode active material.

**15.** A positive electrode comprising:

a current collector; and
a positive electrode active material layer formed by applying the positive electrode slurry composition according to claim 14 on the current collector.

Europäisches Patentamt
European Patent Office
Office européen des brevets

# EUROPEAN SEARCH REPORT

Application Number
EP 25 19 6124

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2024 0060109 A (HANSOL CHEMICAL CO LTD [KR]) 8 May 2024 (2024-05-08)<br>* paragraph [0165] - paragraph [0166] *<br>* paragraph [0190] *<br>* page 193 - page 194 *<br>----- | 1-8,11, 13-15 | INV.<br>C08L25/18<br>C08L33/06<br>C08L43/02<br>C09D125/18 |
| X | WO 2018/168615 A1 (ZEON CORP [JP]) 20 September 2018 (2018-09-20)<br>* example 1 *<br>----- | 1-8, 10-15 | |
| X | WO 2023/140418 A1 (HANSOL CHEMICAL CO LTD [KR]) 27 July 2023 (2023-07-27)<br>* examples 1-1 *<br>* examples 2-1 *<br>* examples 3-1 *<br>----- | 1-9,11, 13-15 | |
| X | JP 2017 098241 A (KANSAI PAINT CO LTD; TOYOTA MOTOR CORP)<br>1 June 2017 (2017-06-01)<br>* paragraph [0093] *<br>* paragraph [0100] *<br>* paragraph [0105] *<br>----- | 1-10, 13-15 | |

TECHNICAL FIELDS SEARCHED (IPC)

C09J
C08L
C09D

The present search report has been drawn up for all claims

2

| Place of search | Date of completion of the search | Examiner |
|---|---|---|
| The Hague | 13 January 2026 | Flores de Paco, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 19 6124

This annex lists the patent family members relating to the patent documents cited in the above-mentioned European search report. The members are as contained in the European Patent Office EDP file on
The European Patent Office is in no way liable for these particulars which are merely given for the purpose of information.

13-01-2026

| Patent document cited in search report | Publication date | Patent family member(s) | Publication date |
|---|---|---|---|
| KR 20240060109 A | 08-05-2024 | NONE | |
| WO 2018168615 A1 | 20-09-2018 | CN 110383546 A | 25-10-2019 |
| | | EP 3598544 A1 | 22-01-2020 |
| | | JP 7056642 B2 | 19-04-2022 |
| | | JP WO2018168615 A1 | 09-01-2020 |
| | | KR 20190125329 A | 06-11-2019 |
| | | WO 2018168615 A1 | 20-09-2018 |
| WO 2023140418 A1 | 27-07-2023 | EP 4467580 A1 | 27-11-2024 |
| | | JP 2025502987 A | 30-01-2025 |
| | | KR 102535032 B1 | 30-05-2023 |
| | | WO 2023140418 A1 | 27-07-2023 |
| JP 2017098241 A | 01-06-2017 | JP 6297121 B2 | 20-03-2018 |
| | | JP 2017098241 A | 01-06-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220141368